# EUROPÄISCHE PATENTSCHRIFT

(11) **EP 2 553 296 B1**
(45) Veröffentlichungstag und Bekanntmachung des Hinweises auf die Patenterteilung: **04.12.2013**
(21) Anmeldenummer: 11710699.7
(22) Anmeldetag: 19.03.2011
(51) Int. Cl.: F16H 59/02

(54) **BEDIENVORRICHTUNG FÜR EIN KRAFTFAHRZEUG**
CONTROL DEVICE FOR A MOTOR VEHICLE
DISPOSITIF DE COMMANDE POUR VÉHICULE À MOTEUR

(30) Priorität: 27.03.2010 DE 102010013169
(43) Veröffentlichungstag der Anmeldung: 06.02.2013
(73) Patentinhaber: Audi AG, 85045 Ingolstadt (DE)
(72) Erfinder: HELOT, Jacques, 80801 München (DE); BEIERLEIN, Ulrich, 85051 Ingolstadt (DE); KETS, Wouter, 85049 Ingolstadt (DE); MERK, Imanuel, 85051 Ingolstadt (DE)
(74) Vertreter: Brandt, Kai
(86) Internationale Anmeldenummer: PCT/EP2011/001351
(87) Internationale Veröffentlichungsnummer: WO 2011/120639

(56) Entgegenhaltungen:
- DE-A1- 19 952 241
- US-A- 5 161 422
- US-A1- 2002 139 212

## Beschreibung

Die Erfindung betrifft eine Bedienvorrichtung für ein Kraftfahrzeug nach der im Oberbegriff von Anspruch 1 näher definierten Art.

Aus der DE 103 17 901 B3 ist eine in Längsrichtung eines Kraftfahrzeugs relativ zu dem Kraftfahrzeug in ihrer Position verschiebliche Mittelkonsole bekannt.

Die DE 100 29 612 A1 beschreibt eine Anzeige- und/oder Bedieneinrichtung in einem Kraftfahrzeug, die mit einer Belüftungseinrichtung eine Baueinheit bildet, welche auf der Mittelkonsole in Fahrzeuglängsrichtung verschiebbar angeordnet ist.

DE 19952241 A1 offenbart eine Bedienvorrichtung gemäß dem Oberbegriff des Anspruchs 1.

Diese bekannten Lösungen sind jedoch für den Einsatz in modernen Kraftfahrzeugen nicht geeignet, da sie dem Fahrer nur einen unzureichenden Komfort bieten.

Es ist Aufgabe der vorliegenden Erfindung, eine Bedienvorrichtung für ein Kraftfahrzeug zu schaffen, mit welcher sowohl ein Getriebe als auch verschiedene Nebenfunktionen des Kraftfahrzeugs bedient werden können, wobei die Bedienvorrichtung dem Fahrer einen möglichst großen Komfort bieten soll.

Erfindungsgemäß wird diese Aufgabe durch die in Anspruch 1 genannten Merkmale gelöst.

Durch die Verschieblichkeit des Grundkörpers, auf welchem das Fahrstufenwählelement, also eine zum Bedienen des Getriebes geeignete Einrichtung, und das Bedienelement zum Bedienen der Nebenfunktionen des Kraftfahrzeugs angeordnet sind, kann ein Großteil der Bedienelemente, mit denen die für einen Fahrer relevanten Funktionen bedient werden können, relativ zu dem Fahrer verstellt werden. Dadurch lässt sich für unterschiedlich große Fahrer eine optimale Anpassung der Bedienvorrichtung erreichen.

Ein besonderer Komfort für den Fahrer ist erfindungsgemäß dadurch gegeben, dass das Fahrstufenwählelement als Handauflage für das Bedienelement für die Nebenfunktionen ausgebildet ist, da dies eine sehr ergonomische Lösung darstellt.

Ein weiterer Vorteil der erfindungsgemäßen Lösung besteht außerdem darin, dass durch die Integration des Fahrstufenwählelements und des Bedienelements auf ein und demselben Grundkörper eine bessere Konzentration der einzelnen Bedieneinrichtungen, mit denen das Kraftfahrzeug gesteuert werden kann, gegeben ist. Dadurch lässt sich eine ruhigere Innenraurngestaltung erreichen.

Eine sehr einfache Ver- und Entriegelung für den Grundkörper ergibt sich, wenn das Bedienelement für die Nebenfunktionen als Verriegelungselement für die Verschiebung des Grundkörpers ausgebildet ist.

Um ein versehentliches Betätigen des Fahrstufenwählelements zu verhindern, kann in einer weiteren vorteilhaften Ausgestaltung der Erfindung vorgesehen sein, dass an dem Grundkörper ein Verriegelungselement zum Aktivieren der Funktion des Fahrstufenwählelements angeordnet ist. Beispielsweise kann vorgesehen sein, dass man auf das Verriegelungselement drückt, wenn man schalten will. Beispielsweise kann dies so ausgestaltet sein, dass man zum Schalten gleichzeitig drücken und schieben muss.

Weitere vorteilhafte Ausgestaltungen und Weiterbildungen der Erfindung ergeben sich aus den restlichen Unteransprüchen. Nachfolgend ist ein Ausführungsbeispiel der Erfindung anhand der Zeichnung prinzipmäßig dargestellt.

Es zeigt:
- Fig. 1: eine perspektivische Ansicht der erfindungsgemäßen Bedienvorrichtung;
- Fig. 2: eine Seitenansicht der Bedienvorrichtung aus Fig. 1 in zwei unterschiedlichen Stellungen;
- Fig. 3: eine Seitenansicht der Bedienvorrichtung aus Fig. 1 in zwei unterschiedlichen Stellungen; und
- Fig. 4: eine weitere perspektivische Ansicht der erfindungsgemäßen Bedienvorrichtung.

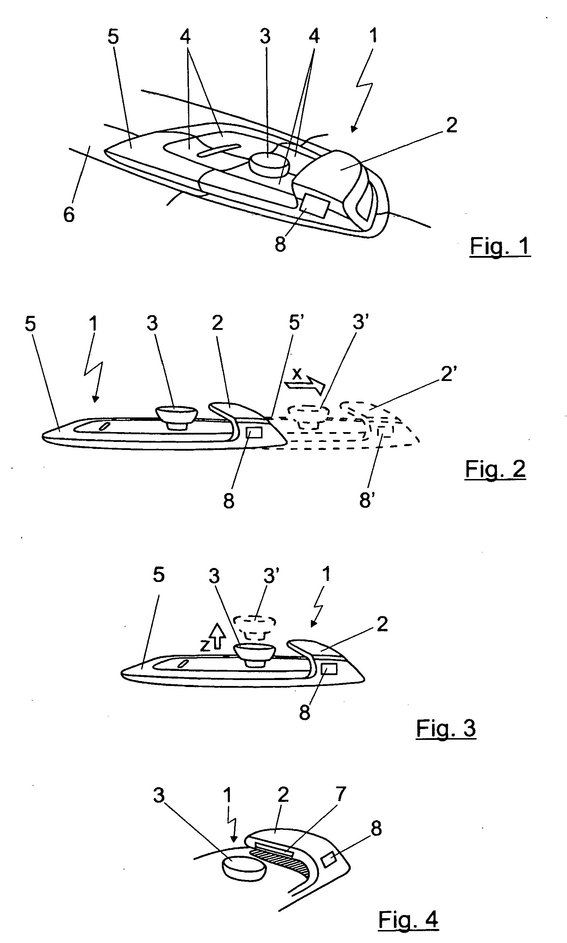

Fig. 1 zeigt eine Bedienvorrichtung 1, die in einem Innenraum eines in seiner Gesamtheit nicht dargestellten Kraftfahrzeugs angeordnet ist. Die Bedienvorrichtung 1 weist ein manuell bedienbares Fahrstufenwählelement 2 und ein Bedienelement 3 zum Bedienen mehrerer Nebenfunktionen des Kraftfahrzeugs auf. Das Fahrstufenwählelement 2 ist zur Bedienung eines nicht dargestellten Getriebes des Kraftfahrzeugs vorgesehen, um die Fahrstufen, mit denen das Kraftfahrzeug betrieben wird, zu wechseln. Mit dem Bedienelement 3 können beispielsweise Geräte wie Navigationssysteme, Radioanlagen, Freisprechanlagen oder eine Lüftung des Kraftfahrzeugs angesteuert werden. Des weiteren kann das Bedienelement 3 dafür vorgesehen sein, bestimmte Parameter des Kraftfahrzeugs einzustellen. Bei den Fahrzeugen der Anmelderin ist das Bedienelement 3 auch als MMI-Bedienelement bekannt. Neben dem Bedienelement 3 sind im vorliegenden Fall mehrere Taster 4 angeordnet, mit denen ebenfalls bestimmte Funktionen des Kraftfahrzeugs angesteuert werden können. Statt wie dargestellt als Dreh-/Drücksteller könnte das Bedienelement 3 und/oder die Taster 4 auch als Touchpad ausgebildet sein.

Das Fahrstufenwählelement 2 und das Bedienelement 3 für die Nebenfunktionen sowie im vorliegenden Fall auch die Taster 4 sind auf einem gemeinsamen Grundkörper 5 angeordnet, der gegenüber einem Innenverkleidungsbauteil, im vorliegenden Fall einer Mittelkonsole 6, des Kraftfahrzeugs verschieblich ist. Statt als die Mittelkonsole 6 könnte das Innenverkleidungsbauteil beispielsweise auch als Armaturenbrett, als Sitz, als Schalttafel oder gegebenenfalls auch als Türverkleidung ausgeführt sein.

Die Verschieblichkeit des Grundkörpers 5 gegenüber der Mittelkonsole 6 in der mit "x" bezeichneten Fahrzeuglängsrichtung ist in Fig. 2 durch die beiden unterschiedlichen Positionen des Fahrstufenwählelements 2 und des Bedienelements 3 erkennbar. In der verschobenen, zweiten Position, die mittels gestrichelter Linien dargestellt ist, sind der Grundkörper, das Fahrstufenwählelement, das Bedienelement und die Taster mit dem Bezugszeichen 5', 2', 3' und 4' bezeichnet.

Um eine Verriegelung des Grundkörpers 5 in den einzelnen Positionen zu ermöglichen, ist im vorliegenden Fall das Bedienelement 3 für die Nebenfunktionen als Verriegelungselement ausgebildet, welches in ein oder mehrere, nicht dargestellte Ausnehmungen in der Mittelkonsole 6 eingreifen kann. Die beiden Positionen des Bedienelements 3 sind in Fig. 3 dargestellt, wobei das Bedienelement 3 in seiner oberen, die Verriegelung des Grundkörpers 5 freigebenden Stellung mit 3' bezeichnet ist. Beim Entriegeln des Bedienelements 3 in der mit "z" bezeichneten Richtung ist eine Verschiebung des Grundkörpers 5 möglich, wobei für diese Verschiebung Schienen oder dergleichen auf der Mittelkonsole 6 vorgesehen sein können.

Das Fahrstufenwählelement 2 ist im vorliegenden Fall als Handauflage ausgebildet, d. h. es ist so geformt, dass der Fahrer seine Hand auf dem Fahrstufenwählelement 2 ablegen kann. Dabei ist die Anordnung des Fahrstufenwählelements 2 relativ zu dem Bedienelement 3 derart, dass beim Auflegen der Hand auf das Fahrstufenwählelement 2 das Bedienelement 3 für die Nebenfunktionen bedient werden kann. Dadurch kann auf ansonsten in diesem Bereich vorgesehene Handauflagen und dergleichen verzichtet werden.

Die Ansteuerung des nicht dargestellten Getriebes über das Fahrstufenwählelement 2 kann einerseits durch Verschieben des Fahrstufenwählelements 2 in der in Fig. 2 mit "x" bezeichneten Fahrzeuglängsrichtung erfolgen. Hierbei ist es zu bevorzugen, wenn das Fahrstufenwählelement 2 so mit dem Grundkörper 5 verbunden ist, dass sich beim Verschieben des Fahrstufenwählelements eine haptische Rückmeldung für einen Benutzer ergibt. Alternativ oder zusätzlich kann das Fahrstufenwählelement 2, wie in Fig. 4 dargestellt, auch ein berührungssensitives Feld 7 aufweisen, mit welchem die Fahrstufen des Getriebes gewählt werden können. Insbesondere im letztgenannten Fall ist es zu bevorzugen, wenn das Fahrstufenwählelement 2 keine mechanische Verbindung mit dem Getriebe aufweist, in welchem die Fahrstufen mittels des Fahrstufenwählelements 2 gewählt werden können. Eine solche Ausführungsform, ein sogenanntes Shift-by-Wire, ist jedoch auch in dem erstgenannten Fall denkbar, in dem das Fahrstufenwählelement 2 in Längsrichtung x des Kraftfahrzeugs verschieblich ist. Das berührungssensitive Feld 7 könnte beispielsweise in zwei Abschnitte unterteilt sein, wobei in einem Abschnitt ein Hoch- und in dem anderen Abschnitt ein Herunterschalten möglich sein könnte.

Obwohl das Fahrstufenwählelement 2 prinzipiell auch zum Bedienen eines Schaltgetriebes vorstellbar ist, ist es für ein automatisches Getriebe besser geeignet. Im Falle der Verwendung des Fahrstufenwählelements 2 für ein Schaltgetriebe sollte dafür Sorge getragen werden, dass trotz der Verschieblichkeit des Fahrstufenwählelements 2 gegenüber dem Grundkörper 5 eine geeignete Anbindung desselben an das Getriebe möglich ist. Gegebenenfalls wäre jedoch auch ein Wechsel der Fahrstufen in dem Schaltgetriebe auf elektronischem Weg denkbar, beispielsweise wenn ein Shift-by-Wire-System eingesetzt wird. Der Einsatz eines solchen Systems ist selbstverständlich auch bei Automatikgetrieben möglich.

In Fig. 4 ist des weiteren erkennbar, dass an dem Grundkörper 5 ein Schaltelement 8 angebracht ist, das zum Aktivieren bzw. Deaktivieren der Funktion des Fahrstufenwählelements 2 dient. Mit dem Schaltelement 8 kann also das Fahrstufenwählelement 2 aktiviert bzw. deaktiviert werden, so dass ein unbeabsichtigtes Betätigen des Fahrstufenwählelements 2 verhindert werden kann, beispielsweise wenn das Fahrzeug im reinen Automatikmodus betrieben wird. In einer nicht dargestellten Ausführungsform kann außerdem vorgesehen sein, dass auf dem Grundkörper 5 eine Anzeige zum Anzeigen der gewählten Fahrstufe angeordnet ist.

Eine weitere Ausführungsform kann darin bestehen, dass das Element 7 als Schaltelement bzw. Verriegelungselement ausgebildet ist und der Gangwechsel durch Schieben des Fahrstufenwählelements 2 erfolgt, wenn das Verriegelungselement 7 betätigt ist.

Die Bewegung des Grundkörpers 5 mit dem darauf angebrachten Fahrstufenwählelement 2 und dem Bedienelement 3 könnte auch an die Ansteuerung der Verstellung eines nicht dargestellten Fahrzeugsitzes gekoppelt sein, so dass beim Verstellen des Fahrzeugsitzes auch der Grundkörper 5 in eine Position verfahren werden könnte, die für eine auf den Fahrzeugsitz Platz nehmende Person geeignet ist. Dementsprechend könnte die Verstellung des Grundkörpers 5 auch in eine an sich bekannte Memory-Funktion integriert sein. Diese elektronische bzw. automatische Verstellung des Grundkörpers 5 könnte dennoch so ausgeführt sein, dass der Grundkörper 5 gegebenenfalls dennoch manuell verstellt werden könnte.

## Patentansprüche

1. Bedienvorrichtung für ein Kraftfahrzeug, mit einem manuell bedienbaren Fahrstufenwählelement und mit einem Bedienelement zum Bedienen von Nebenfunktionen des Kraftfahrzeugs, wobei das Fahrstufenwählelement so ausgebildet ist, dass es als Handauflage für die Bedienung des Bedienelements für die Nebenfunktionen nutzbar ist,
**dadurch gekennzeichnet, dass**
das Fahrstufenwählelement (2) und das Bedienelement (3) für die Nebenfunktionen auf einem gemeinsamen, gegenüber einem Innenverkleidungsteil (6) des Kraftfahrzeugs verschieblichen Grundkörper (5) angebracht sind, und dass das Fahrstufenwählelement (2) zum Wählen der Fahrstufen gegenüber dem Grundkörper (5) verschieblich ist oder dass das Fahrstufenwählelement (2) ein berührungssensitives Feld (7) zum Wählen der Fahrstufen aufweist.

2. Bedienvorrichtung nach Anspruch 1,
**dadurch gekennzeichnet, dass**
das Bedienelement (3) für die Nebenfunktionen als Verriegelungselement für die Verschiebung des Grundkörpers (5) ausgebildet ist.

3. Bedienvorrichtung nach Anspruch 1 oder 2,
**dadurch gekennzeichnet, dass**
das Fahrstufenwählelement (2) so mit dem Grundkörper (5) verbunden ist, dass sich beim Verschieben des Fahrstufenwählelements eine haptische Rückmeldung für einen Benutzer ergibt.

4. Bedienvorrichtung nach einem der Ansprüche 1 bis 3,
**dadurch gekennzeichnet, dass**
an dem Grundkörper (5) ein Schaltelement (8) zum Aktivieren der Funktion des Fahrstufenwählelements (2) angeordnet ist.

5. Bedienvorrichtung nach einem der Ansprüche 1 bis 4,
**dadurch gekennzeichnet, dass**
das Fahrstufenwählelement (2) keine mechanische Verbindung mit einem Getriebe aufweist, in welchem die Fahrstufen wählbar sind.

6. Bedienvorrichtung nach einem der Ansprüche 1 bis 5,
**dadurch gekennzeichnet, dass**
das Innenverkleidungsteil (6) eine Mittelkonsole, ein Sitz oder eine Schalttafel ist.

7. Bedienvorrichtung nach einem der Ansprüche 1 bis 6,
**dadurch gekennzeichnet, dass**
die Bewegung des Grundkörpers (5) an die Verschiebung eines Fahrzeugsitzes gekoppelt ist.

8. Bedienvorrichtung nach einem der Ansprüche 1 bis 7,
**dadurch gekennzeichnet, dass**
auf dem Grundkörper (5) eine Anzeige zum Anzeigen der gewählten Fahrstufe angeordnet ist.

## Claims

1. Control device for a motor vehicle, comprising a manually controllable gear selector element and a control element for controlling secondary functions of the motor vehicle, the gear selector element being formed such that it can be used as a hand rest for controlling the control element for the secondary functions,
**characterised in that**
the gear selector element (2) and the control element (3) for the secondary functions are attached to a common main body (5) which is displaceable relative to an inner lining part (6) of the motor vehicle, and **in that** the gear selector element (2) is displaceable relative to the main body (5) for selecting the gear s or in that the gear selector element (2) comprises a touch-sensitive panel (7) for selecting the gears.

2. Control device according to claim 1,
**characterised in that**
the control element (3) for the secondary functions is formed as a locking element for the displacement of the main body (5).

3. Control device according to either claim 1 or claim 2,
**characterised in that**
the gear selector element (2) is connected to the main body (5) such that haptic feedback for a user is provided during displacement of the gear selector element.

4. Control device according to any of claims 1 to 3,
**characterised in that**
a switch element (8) for activating the function of the gear selector element (2) is arranged on the main body (5).

5. Control device according to any of claims 1 to 4,
**characterised in that**
the gear selector element (2) has no mechanical connection to a gearbox in which the gears can be selected.

6. Control device according to any of claims 1 to 5,
**characterised in that**
the inner lining part (6) is a central console, a seat or a control panel.

7. Control device according to any of claims 1 to 6,
**characterised in that**
the movement of the main body (5) is coupled to the displacement of a vehicle seat.

8. Control device according to any of claims 1 to 7,
**characterised in that**
a display for displaying the selected gear is arranged on the main body (5).

## Revendications

1. Dispositif de commande pour un véhicule automobile, comprenant un élément sélecteur de rapports et un élément de commande pour commander des fonctions auxiliaires du véhicule automobile, dans lequel l'élément sélecteur de rapports est conformé de manière qu'il puisse être utilisé comme repose-main pour la manoeuvre de l'élément de commande pour les fonctions auxiliaires, **caractérisé en ce que** :
l'élément sélecteur de rapports (2) et l'élément de
commande (3) pour les fonctions auxiliaires sont montés sur un corps de base (5) commun déplaçable par rapport à une partie de revêtement interne (6) du véhicule automobile et l'élément sélecteur de rapports (2) peut être déplacé par rapport au corps de base (5) pour la sélection des rapports ou l'élément sélecteur de rapports (2) présente une zone sensible au contact (7) pour la sélection des rapports.

2. Dispositif de commande selon la revendication 1, **caractérisé en ce que** :
l'élément de commande (3) pour les fonctions
auxiliaires se présente sous la forme d'un élément de verrouillage pour le déplacement du corps de base (5).

3. Dispositif de commande selon la revendication 1 ou
la revendication 2,
**caractérisé en ce que** :
l'élément sélecteur de rapports (2) est raccordé au
corps de base (5) de sorte que, lors du déplacement de l'élément sélecteur de rapports, il apparaisse un message de confirmation haptique pour un utilisateur.

4. Dispositif de commande selon l'une quelconque des
revendications 1 à 3,
**caractérisé en ce que** :
un élément de commutation (8) est agencé sur le corps de base (5) pour activer le fonctionnement de l'élément sélecteur de rapports (2).

5. Dispositif de commande selon l'une quelconque des
revendications 1 à 4,
**caractérisé en ce que** :
l'élément sélecteur de rapports (2) ne présente pas de liaison mécanique avec une boîte de vitesses dans laquelle les rapports peuvent être sélectionnés.

6. Dispositif de commande selon l'une quelconque des
revendications 1 à 5,
**caractérisé en ce que** :
la partie de revêtement interné (6) est une console centrale, un siège ou un tableau de bord.

7. Dispositif de commande selon l'une quelconque des
revendications 1 à 6,
**caractérisé en ce que** :
le mouvement du corps de base (5) est couplé au
déplacement d'un siège dé véhicule.

8. Dispositif de commande selon l'une quelconque des
revendications 1 à 7,
**caractérisé en ce que** :
un affichage est agencé sur le corps de base (5) pour afficher le rapport sélectionné.
